# NEUE EUROPÄISCHE PATENTSCHRIFT

(11) **EP 1 667 892 B2**
(45) Veröffentlichungstag und Bekanntmachung des Hinweises auf die Entscheidung über den Einspruch: **29.05.2013**
(45) Hinweis auf die Patenterteilung: 17.10.2007
(21) Anmeldenummer: 05746407.5
(22) Anmeldetag: 06.05.2005
(51) Int. Cl.: B62D 5/00, F16H 49/00

(54) **VORRICHTUNG ZUM ÜBERLAGERN VON LENKBEWEGUNGEN FÜR EINE LENKKRAFTHILFE SOWIE VERFAHREN ZUM BETREIBEN DER VORRICHTUNG**
DEVICE FOR SUPERIMPOSING STEERING MOTIONS ON A POWER STEERING SYSTEM AS AN ASSISTANCE TO STEERING AND PROCESS FOR OPERATING THE DEVICE
DISPOSITIF SERVANT A SUPERPOSER DES MOUVEMENTS DE BRAQUAGE POUR UN SYSTEME D'ASSISTANCE DE DIRECTION ET PROCEDE POUR FAIRE FONCTIONNER CE DISPOSITIF

(30) Priorität: 10.05.2004 DE 102004023490
(43) Veröffentlichungstag der Anmeldung: 14.06.2006
(60) Teilanmeldung: 07020215.5
(73) Patentinhaber: Ovalo GmbH, 65555 Limburg a. d. Lahn (DE)
(72) Erfinder: GILGES, Siegmar, 65549 Limburg a .d. Lahn (DE); MENDEL, Matthias, 65558 Eppenrod (DE); SCHAFFER, Michael, 65611 Niederbrechen (DE)
(74) Vertreter: Müller, Eckhard
(86) Internationale Anmeldenummer: PCT/EP2005/004944
(87) Internationale Veröffentlichungsnummer: WO 2005/110833

(56) Entgegenhaltungen:
- WO-A-2004/000629
- DE-A1- 1 475 517
- DE-A1- 2 951 277
- DE-A1- 3 721 042
- DE-A1- 19 652 229
- DE-A1- 19 823 031
- DE-A1- 19 906 703
- JP-A- 2000 085 610
- JP-A- 2004 114 857
- US-A- 2 823 776
- US-A- 3 172 299
- US-A- 3 899 061
- US-A- 5 230 397
- DUBBEL, W. BEITZ & K.-H. GROTE: 'Taschenbuch für den Maschinenbau', 2001, SPRINGER-VERLAG, BERLIN, ISBN 3-540-67777-1 vol. 'Kupplungen und Bremsen', Seite G72
- MARKS´: 'Standard Handbook for Mechanical Engineers', Bd. 9, 1987, MCGRAW-HILL BOOK CO., NEW YORK vol. 'Machine Elements', Seiten 8-39 - 8-39
- DR.-ING O. FRATSCHNER: 'Maschinen Elemente', 1961, VERLAG W. GIRARDET, ESSEN vol. 'Selbsttätige Kupplungen', Seiten 174 - 175
- HERBERT W. MÜLLER: 'Die Umlaufgetriebe', 1998, SPRINGER, BERLIN
- EUR-LEX 31995L00565 RICHTLINIE 95/56/EG AUS AMTSBLATT L286 29 November 1995 - 29 November 1995,

## Beschreibung

Die Erfindung betrifft ein Lenksystem mit einer Vorrichtung zum Überlagern von Lenkbewegungen für eine Lenkkrafthilfe bei Kraftfahrzeugen, mit einer Lenkeingangswelle zum Ausführen einer Hauptlenkbewegung, welche mittels eines nicht-selbsthemmenden Getriebes mit einer Lenkausgangswelle verbunden ist, einem Motor zum Erzeugen einer Hilfslenkbewegung, welcher zum Überlagern der Hilfslenkbewegung mit der Hauptlenkbewegung über seine Abtriebswelle mit dem Getriebe gekoppelt ist, und mit einer zuschaltbaren Feststelleinrichtung, mittels welcher eine Drehbewegung der Abtriebswelle verhinderbar ist. Die Erfindung betrifft ferner ein Verfahren zum Betreiben der Vorrichtung.

### Stand der Technik

Eine derartige Vorrichtung zum Überlagern von Lenkbewegungen ist beispielsweise aus dem Katalog "ZF Active Steering for Mid-size and Luxury Cars", ZF Lenksysteme, Schwäbisch Gmünd/Deutschland 8/2003, bekannt. Sie ermöglicht ein aktives Eingreifen in die Lenkung eines Kraftfahrzeuges, indem die über das Lenkrad ausgeführte Hauptlenkbewegung mit einer Hilfslenkbewegung überlagert wird. Der wirksame Lenkwinkel an den lenkbaren Rädern kann dadurch größer oder kleiner ausfallen, als ihn der Fahrer am Lenkrad einstellt. Insofern liegt eine variable Lenkübersetzung vor, welche beispielsweise geschwindigkeitsabhängig veränderbar ist. Es kann bspw. bei hohen Geschwindigkeiten des Fahrzeuges der an den Rädern wirksame Lenkeinschlag bzw. Lenkwinkel kleiner gehalten werden als ihn der Fahrer einstellt, indem eine zur Hauptlenkbewegung entgegengesetzte Hilfslenkbewegung erzeugt wird. Dadurch ist die Spurhaltung des Fahrzeuges bei hohen Geschwindigkeiten verbessert und das Fahren sicherer. Dagegen kann bei geringer Geschwindigkeit des Fahrzeuges durch die Hilfslenkbewegung ein größerer Lenkwinkel realisiert werden als ihn der Fahrer am Lenkrad einstellt, indem eine die Hauptlenkbewegung unterstützende Hilfslenkbewegung erzeugt wird. Auf diese Weise ist das Einparken und Durchfahren enger Kurven erleichtert.

Bei den bekannten Vorrichtungen ist eine zuschaltbare Feststelleinrichtung vorgesehen, welche ein Drehen der Abtriebswelle des die Hilfslenkbewegung erzeugenden Motors mechanisch blockiert. Die Feststelleinrichtung wird beispielsweise zugeschaltet, wenn der Motor auf Grund eines Fehlers abgeschaltet werden muss oder wenn das Fahrzeug abgestellt wird. Die Feststelleinrichtung soll verhindern, dass auf die lenkbaren Räder wirkende Kräfte, wie sie beispielsweise beim Anfahren eines Bordsteines oder bei der Lenkungsüberprüfung in der Werkstatt auftreten, es zu einer bleibenden Verstellung zwischen der Lenkradposition und dem Lenkeinschlag an den Rädern kommt. Hierzu müssen die Feststelleinrichtung und alle weiteren im Kraftfluss liegenden Bauteile des Lenksystems derart ausgelegt sein, dass sie den Belastungen aufgrund der auf die Räder wirkenden Kräfte standhalten. Dabei ist insbesondere auch der Fall zu berücksichtigen, bei dem eine Bewegung des Lenkrades, beispielsweise bei eingerastetem Lenkradschloss, blockiert ist und dadurch den auf die Räder wirkenden Kräften durch Lenkradeinschlag nicht nachgegeben werden kann. Das Lenksystem ist daher relativ groß bauend dimensioniert und somit in den Herstellungskosten teuer.

Eine Vorrichtung der hier angesprochenen Art ist auch aus der DE 199 06 703 A1 bereits bekannt. Die Vorrichtung weist eine Eingangswelle zum Ankuppeln an das Lenkrad des Fahrzeuges und eine Ausgangswelle zum Ankoppeln an das Lenkgetriebe der Fahrzeuglenkung auf. Die Vorrichtung weist ferner einen Elektromotor zum Erzeugen einer Hilfslenkbewegung auf, dessen Abtriebswelle über ein Überlagerungsgetriebe mit der Ausgangswelle verbunden ist. Bei der bekannten Vorrichtung ist eine zuschaltbare Feststelleinrichtung in Art einer elektromagnetischen Bremse vorgesehen. Die Bremse ist im stromlosen Zustand geschlossen, wobei dann die Abtriebswelle des Elektromotors am Gehäuse des Überlagerungsgetriebes festgelegt und über das dadurch blockierte Überlagerungsgetriebe eine starre Verbindung zwischen der Eingangswelle und der Ausgangswelle hergestellt ist. In diesem Fall werden vom Lenkrad ausgelöste Lenkwinkel unverändert auf das Lenkgetriebe übertragen. Um ein von dem Lenkwinkel des Lenkrades unabhängigen Zusatzlenkwinkel auf das Lenkgetriebe übertragen zu können, muss die elektromagnetische Bremse gelöst werden. Hierzu wird die Magnetspule der elektromagnetischen Bremse bestromt und dadurch die Bremse geöffnet.

Eine ähnliche Vorrichtung zum Überlagern von Lenkbewegungen für eine Lenkkrafthilfe ist auch aus der WO 2004/000629 A2 bekannt. Zum Erzeugen einer Hilfslenkbewegung ist dort ebenfalls ein Elektromotor vorgesehen, welcher über ein Überlagerungsgetriebe mit der Ausgangwelle der Vorrichtung wirkverbunden ist. Die Ausgangswelle ist bei dieser bekannten Vorrichtung über einen Drehstab mit der Eingangswelle der Vorrichtung mechanisch verbunden. Um im Bedarfsfall, beispielsweise bei einem Fehler des Elektromotors, diesen von der Eingangswelle entkoppeln zu können, ist bei der bekannten Vorrichtung eine Kupplung vorgesehen. Damit kann die Bewegung der Antriebswelle des Elektromotors von der Drehbewegung des Lenksystems beziehungsweise der Ausgangswelle der Vorrichtung entkoppelt werden.

Aus der WO 98/12097 A1 ist eine elektrisch unterstützte Lenkhilfe bekannt, welche einen mit der Lenkspindel wirkverbindbaren Elektromotor und ein Getriebe zur Lenkkraftunterstützung aufweist. Das Getriebe ist über eine formschlüssige Kupplungseinrichtung mit dem Motor verbunden und ermöglicht ein gesteuertes Lösen der Wirkverbindung zwischen dem Getriebe und dem Motor. Im eingekuppelten Zustand erfolgt eine Bewegungsübertragung von dem Motor auf das Getriebe und damit eine Lenkkraftunterstützung. Im ausgekuppelten Zustand wird dagegen diese Wirkverbindung unterbrochen und der Motor dreht im Freilauf.

Auch aus der DE 197 48 667 A1 ist eine Lenkkrafthilfe mit einer Kupplungseinrichtung bekannt, bei welcher im eingekuppelten Zustand eine Wirkverbindung zwischen dem Motor und dem Getriebe herstellt und im ausgekuppelten Zustand diese Verbindung unterbrochen ist und der Motor im Freilauf dreht.

Weder aus der WO 98/12097 A1 noch aus der DE 197 48 667 A1 geht eine Feststelleinrichtung zum drehfesten Halten der Abtriebswelle des Motors hervor.

### Aufgabenstellung

Aufgabe der Erfindung ist es, ein Lenksystem mit einer Vorrichtung zum Überlagern von Lenkbewegungen der eingangs genannten Art zu schaffen, welche kompakt baut und durch welche ein Lenksystem mit insgesamt geringem Platzbedarf realisierbar ist, wobei gleichzeitig eine ausreichende Lebensdauer der Bauteile sichergestellt ist. Ferner soll ein Verfahren zum Betreiben der Vorrichtung vorgeschlagen werden. Nach einem Nebenaspekt der Erfindung soll ein hohes Maß an Sicherheit beim Lenken gewährleistet werden.

### Erfindung und vorteilhafte Wirkungen

Zur Lösung der Aufgabe wird ein Lenksystem mit einer Vorrichtung vorgeschlagen, welche die in Anspruch 1 genannten Merkmale aufweist. Die Vorrichtung zeichnet sich u. a. dadurch aus, dass die Feststelleinrichtung als Bremse ausgebildet ist, welche im zugeschalteten Zustand der Feststelleinrichtung bei Auftreten eines radseitig erzeugten Drehmomentes in der Abtriebswelle mit einem Wert über einem vorgegebenen Wert eine Bewegung der Abtriebswelle zulässt, wobei der vorgegebene Wert größer als die im Fahrbetrieb des Fahrzeuges bei zugeschalteter Feststelleinrichtung in der Abtriebswelle auftretenden Drehmomente ist.

Durch diese Maßnahme können Drehmomentspitzen in der Abtriebswelle und in den weiteren im Kraftfluss liegenden Bauteilen des Lenksystems abgebaut werden. Solche Drehmomentspitzen werden insbesondere durch Kräfte hervorgerufen, welche auf die lenkbaren Räder, also radseitig, wirken, beispielsweise bei der Lenkungsüberprüfung in der Werkstatt. Durch deren Reduzierung kann eine Beschädigung beziehungsweise Zerstörung der Bauteile vermieden werden, ohne dass sie in der Weise wie bei der bekannten Vorrichtung überdimensioniert werden müssten. Insofern kann unter Beibehaltung einer ausreichenden Lebensdauer der Bauteile eine kompakte und klein bauende Vorrichtung realisiert werden, wobei auch das Lenksystem insgesamt kleiner dimensionierbar ist.

Nach einer ersten Ausgestaltung der Erfindung ist es vorgesehen, dass die Feststelleinrichtung eine reibschlüssige Bremse ist. Hierdurch kann in technisch einfacher Weise die Abtriebswelle im Stillstand gehalten werden, wobei beim Auftreten von Drehmomenten in der Abtriebswelle über dem vorgegebenen Wert bauartbedingt ein Durchrutschen der Bremse unter Bewegung der Abtriebswelle erfolgt.

Nach einer weiteren Ausgestaltung der Erfindung ist es vorgesehen, dass die Feststelleinrichtung eine Scheibenbremse ist mit einer mit der Abtriebswelle des Motors drehfest verbundenen Bremsscheibe und einem Bremskraft erzeugenden Teil, welches auf die Bremsscheibe wirkt und sich an einem Gehäuseteil des Motors, beispielsweise mittels wenigstens einer Schraubverbindung, abstützt. Das Gehäuseteil des Motors dient dadurch zusätzlich der Befestigung der Feststelleinrichtung. Durch die Doppelfunktion dieses Bauteiles kann der Integrationsgrad der Vorrichtung erhöht werden, wodurch sich das Bauvolumen und das Gewicht der Vorrichtung wie auch die Anzahl der erforderlichen Bauteile reduziert. Darüber hinaus ist bereits die Feststelleinrichtung aufgrund ihrer Ausbildung als Scheibenbremse besonders klein bauend.

Vorzugsweise wirkt das Bremskraft erzeugende Teil über ein Scheibenelement auf die Bremsscheibe. Hierdurch kann auf einfache Weise eine über den Umfang gleichmäßig verteilte Druckkraft auf die Bremsscheibe aufgebracht werden. Sofern das Scheibenelement aus einem metallischem Werkstoff hergestellt ist und die Bremskraft und/oder die Lösekraft der Bremse durch ein magnetisches Feld hervorgerufen wird, ist dadurch ein magnetischer Rückschluß für das erzeugte magnetische Feld realisierbar.

Von Vorteil ist es, dass die Bremsscheibe zwischen dem Bremskraft erzeugenden Teil oder dem Scheibenelement und dem Gehäuseteil des Motors angeordnet ist. Dadurch übernimmt das Gehäuseteil des Motors zusätzlich auch eine Schutzfunktion für die Bremsscheibe. Auch ist die Möglichkeit gegeben, dass zum Bremsen die Bremsscheibe gegen das Gehäuseteil gedrückt wird, somit das Gehäuseteil als Reibfläche für die Bremsscheibe dient. Das Gehäuseteil des Motors übt auch in diesem Fall eine mechanische Funktion der Bremse aus mit den sich daraus ergebenden vorstehend bereits ausgeführten Vorteilen.

Es bietet sich an, dass die Bremsscheibe in axialer Richtung auf einem mit der Abtriebswelle drehfest verbundenen Mitnehmer gegen das Bremskraft erzeugende Teil und/oder gegen das Gehäuseteil des Motors verschiebbar ist, welcher mit der Abtriebswelle drehfest verbunden ist. Durch die axiale Beweglichkeit der Bremsscheibe ist in konstruktiv einfacher Weise ein Abbremsen beziehungsweise Halten der Abtriebswelle durch Reibschluss zwischen der Bremsscheibe und dem Bremskraft erzeugenden Teil oder zwischen der Bremsscheibe und dem Gehäuseteil des Motors realisierbar. Bevorzugt sollte der Mitnehmer mit der Abtriebswelle mittels Verklebung drehfest verbunden sein, da auf diese Weise einfach und ohne zusätzliche Bauteile die Verbindung als Kraftschlußverbindung hergestellt ist. Selbstverständlich können auch alle üblichen anderen Kraftschlußverbindungen und/oder Formschlußverbindungen eingesetzt werden.

Es bietet sich an, dass die Bremsscheibe eine Innenverzahnung aufweist, welche mit der Außenverzahnung des Mitnehmers kämmt. Dadurch ist ein gleichmäßiger, über den Umfang verteilt wirkender Formschluß zwischen dem Mitnehmer und der Bremsscheibe sichergestellt und die Gefahr eines Verkantens der Bremsscheibe an dem Mitnehmer aufgrund eines Verkippens der Bremsscheibe bzgl. der Längsmittelachse der Abtriebswelle vermieden.

Eine weitere Ausgestaltung der Erfindung sieht vor, dass im zugeschalteten Zustand der Feststelleinrichtung das Bremskraft erzeugende Teil die Bremsscheibe gegen das Gehäuseteil des Motors drückt. Hierdurch ist ein verbesserter Integrationsgrad der Vorrichtung erreicht, da das Gehäuseteil des Motors zusätzlich eine mechanische Funktion der Feststelleinrichtung ausübt, nämlich als Reibfläche für die Bremsscheibe wirkt.

Nach einer weiteren Ausgestaltung der Erfindung ist es vorgesehen, dass das Bremskraft erzeugende Teil wenigstens einen Magneten, vorzugsweise einen Permanentmagneten, oder wenigstens ein Federelement aufweist. Hierdurch kann in einfacher Weise eine Bremskraft erzeugt werden.

Nach einer weiteren Ausgestaltung der Erfindung ist es vorgesehen, dass zum Lösen der Bremse ein die Bremskraft kompensierendes Teil vorgesehen ist. Hierdurch ist erreicht, dass bei einer Deaktivierung des Bremskraft kompensierenden Teiles eine Bremswirkung durch das Bremskraft erzeugende Teil an der Abtriebswelle anliegt und die Abtriebswelle abbremst bzw. im Stillstand hält. Bevorzugt sollte das Bremskraft kompensierende Teil elektrisch aktivierbar sein. Im Falle eines Ausfalles der Spannungsversorgung des Motors wird auf diese Weise immer die Bremse aktiviert und damit eine unkontrollierte und ungewollte Überlagerung von Lenkbewegungen vermieden. Ein sicherer Lenkbetrieb ist damit auch bei Ausfall der Spannungsversorgung gewährleistet.

Es bietet sich an, dass das Bremskraft kompensierende Teil und das Bremskraft erzeugende Teil koaxial zur Abtriebswelle des Motors angeordnet sind. Auch diese Maßnahme trägt zu einer kompakten Bauform der Feststelleinrichtung bei.

Von Vorteil ist, dass das Bremskraft kompensierende Teil und das Bremskraft erzeugende Teil ringförmig ausgebildet sind und unmittelbar aneinandergrenzen. Hierdurch kann eine auf den Umfang der Bremsscheibe gleichmäßig verteilt wirkende Bremskraft und eine in gleicher Weise wirkende die Bremskraft kompensierende Kraft zum Lösen der Bremse erzeugt werden, so dass eine störungsfreie und sichere Betriebsweise der Bremse gewährleistet ist.

In einfacher und kostengünstiger Weise ist das Bremskraft kompensierende Teil von wenigstens einem Elektromagneten gebildet. Dadurch kann ein magnetisches Feld erzeugt werden, dessen Feldlinien entgegengesetzt zu den Feldlinien des Bremskraft erzeugenden Teiles ausgerichtet sind und damit die resultierende magnetische Kraftwirkung der Felder auf die Bremsscheibe zu Null wird. Sofern das Bremskraft erzeugende Teil anstelle eines Magneten ein Federelement aufweist, kann ein magnetisches Feld erzeugt werden, dessen Feldlinien derart ausgerichtet sind, dass eine magnetische Kraft entgegengesetzt zur Kraft des Federelementes auf die Bremsscheibe wirkt.

Von Vorteil ist es, dass das Bremskraft kompensierende Teil von einem metallischen Gehäuseteil der Feststelleinrichtung umgeben ist. Bei einem als Elektromagneten ausgebildeten Bremskraft kompensierende Teil ist dadurch ein magnetischer Rückschluss gegenüber den anderen Bauteilen der Vorrichtung, wie beispielsweise dem Getriebe und der Abtriebswelle des Motors, erzielt.

Nach einer weiteren Ausgestaltung der Erfindung ist es vorgesehen, dass das Getriebe, die Feststelleinrichtung und der Motor hintereinander liegend koaxial bezüglich der Lenkeingangswelle angeordnet sind. Dadurch ist sowohl in radialer Richtung als auch in axialer Richtung eine besonders klein bauende Vorrichtung realisiert, wobei aufgrund der Hintereinanderlage ein einfaches Montieren und Demontieren von Motor, Getriebe und Festelleinrichtung ermöglicht ist.

Nach einer bevorzugten Ausgestaltung der Erfindung ist es vorgesehen, dass das Getriebe ein Spannungswellengetriebe ist, mit einem mit der Abtriebswelle des Motors drehfest verbindbaren Wellengenerator (Wave Generator), einem durch den Wellengenerator bewegbaren elastisch verformbaren Getriebering (Flexspline) und einem zylindrischen Getriebering (Circular Spline), dessen Innenverzahnung mit der Außenverzahnung des Flexsplines kämmt, wobei der Circular Spline mit der Lenkausgangswelle und der Flexspline mit der Lenkeingangswelle drehfest verbindbar ist. Durch den Einsatz eines Spannungswellengetriebes, welches auch als Harmonic Drive-Getriebe bezeichnet wird, kann eine besonders kompakte Bauweise der Vorrichtung mit geringem Gewicht realisiert werden. Es ist dadurch ferner eine Getriebefunktion mit hoher Positionier- und Wiederholgenauigkeit sowie hohem Wirkungsgrad gewährleistet. Durch die drehfeste Verbindung der Lenkeingangswelle mit dem Flexspline ist eine mechanische Verbindung zwischen Lenkeingangswelle und Lenkausgangswelle sichergestellt, so dass auch bei zugeschalteter Feststelleinrichtung, also bei festgehaltener Abtriebswelle, noch problemlos mittels der Hauptlenkbewegung ein Lenken der Räder möglich ist.

Eine weitere Ausgestaltung der Erfindung besteht darin, dass die Abtriebswelle des Motors einen Teil des Wellengenerators bildet. Hierdurch kann eine kompakte Vorrichtung in axialer Richtung realisiert werden, da auf zusätzliche Bauteile zwischen der Abtriebswelle und dem Wellengenerator, wie bspw. einem Flansch oder eine zusätzliche Lagerung, verzichtet werden kann. Damit lassen sich auch die sich aus Bauteil- und Montagekosten zusammensetzenden Herstellungskosten erheblich reduzieren. Diese Maßnahme führt ebenfalls zu einer Gewichtsersparnis der Vorrichtung.

Eine vorteilhafte Ausgestaltung der Erfindung besteht darin, dass die Abtriebswelle des Motors als Hohlwelle ausgebildet ist, durch welche die Lenkeingangswelle hindurchgreift. Durch diese Maßnahme ist eine besonders kompakte Bauform der Vorrichtung möglich. Darüber hinaus ist das Gewicht der Abtriebswelle erheblich reduziert.

Weiterhin ist eine Lagerung für die Abtriebswelle des Motors vorgesehen ist, welche mit dem Gehäuseteil der Feststelleinrichtung drehfest verbunden ist. Damit übt das Gehäuseteil zusätzlich zu seiner Gehäusefunktion eine weitere mechanische Funktion aus. Dadurch kann eine weitere Verminderung des Bauvolumens der Vorrichtung, insbesondere in axialer Richtung, erreicht werden.

Mit Vorteil ist der elastisch verformbare Getriebering im Wesentlichen topfförmig ausgebildet und weist mit seiner Öffnung in Richtung zum Motor. Durch Aufstecken des elastisch verformbaren Getrieberinges auf die Abtriebswelle ergibt sich dadurch gleichzeitig eine Montage des Flexsplines auf den Wellengenerator.

Mit Vorteil ist der topfförmig ausgebildete Flexspline über eine an seiner Bodenfläche angeordneten Nabe mit der Lenkeingangswelle drehfest verbunden. Dadurch kann in einfacher Weise eine drehfeste Verbindung zwischen Flexspline und Lenkeingangswelle durch Aufstecken der Nabe auf die Lenkeingangswelle ohne zusätzliche Bauteile, wie beispielsweise Schrauben oder dergleichen, realisiert werden.

Es bietet sich an, dass die Nabe im Wesentlichen innerhalb des topfförmig ausgebildeten Flexsplines angeordnet ist. Durch diese Maßnahme ist der Bauraumbedarf des Getriebes, insbesondere in axialer Richtung, reduziert und gleichzeitig eine sichere Kraftübertragung von der Lenkeingangswelle zum Flexspline gewährleistet. Zur drehfesten Verbindung können übliche Verbindungsmittel für Wellen-Naben-Verbindungen verwendet werden, welche bspw. auf einer Vielkeilwelle oder Kerbzahnwelle, einem Querstift oder Paßstift, Nutenkeilen oder aber einem Klemmsitz bzw. Press- oder Schrumpfsitz basieren.

Nach einer weiteren Ausgestaltung der Erfindung ist es vorgesehen, dass der Motor einen mit der Abtriebswelle drehfest verbundenen Rotor und einen den Rotor umfangsseitig umgebenden Stator aufweist. Durch diese Anordnung von Stator und Rotor ist ein in radialer Richtung sehr kompakt bauender Antrieb geschaffen.

Zur Lösung der Aufgabe wird ferner ein Verfahren zum Betreiben der Vorrichtung zum Überlagern von Lenkbewegungen mit den Merkmalen des Anspruchs 23 vorgeschlagen, bei dem die Drehbewegung der Abtriebswelle im ausgeschalteten Zustand des Motors mittels der Feststelleinrichtung verhindert ist. Das Verfahren zeichnet sich i. W. dadurch aus, dass im ausgeschalteten Zustand des Motors ein Zurückdrehen der Abtriebswelle bei Auftreten von radseitig erzeugten Drehmomenten über einem vorgegebenen Wert zugelassen wird, wobei der vorgegebene Wert größer als die im Fahrbetrieb des Fahrzeuges in der Abtriebswelle auftretenden Drehmomente ist.

Durch diese Maßnahme können Drehmomentspitzen in der Abtriebswelle wie auch in den im Kraftfluß liegenden Bauteilen des Lenkungsstranges reduziert werden, so dass eine entsprechend kleinere Dimensionierung der Bauteile möglich ist. Solche Drehmomentspitzen werden durch Kräfte hervorgerufen, welche im ausgeschalteten Zustand des Motors bei zugeschalteter Feststelleinrichtung auf die lenkbaren Räder, also radseitig, wirken. Das Zurückdrehen der Abtriebswelle kann bspw. auf "Extrembelastungsfälle" beschränkt sein, bei denen im ausgeschalteten Zustand des Motors um ein Vielfaches höhere Drehmomente auf die Abtriebswelle wirken, als sie durch den Lenkvorgang des Fahrers hervorgerufen werden. Diese Zustände treten bspw. beim Einstellen bzw. bei der Funktionsprüfung der Lenkung in der Werkstatt auf.

Nach einer Weiterbildung der Erfindung ist es vorgesehen, dass im Betrieb des Motors die Feststelleinrichtung bei Bedarf, insbesondere bei einer Fehlfunktion des Motors, zugeschaltet wird und die Abtriebswelle bis zu ihrem Stillstand abbremst. Dadurch können unkontrollierte Hilfslenkbewegungen des Motors, insbesondere während des Fahrzeugbetriebes, verhindert werden. Dadurch kann eine hohe Betriebssicherheit im Betrieb der Vorrichtung gewährleistet werden, da durch das Festsetzen der Abtriebswelle die von dem Motor erzeugte Hilfslenkbewegung nicht mehr auf das Getriebe wirkt und somit die wirksame Lenkbewegung nur noch von der Hauptlenkbewegung des Fahrers ausgeführt wird.

Es ist ferner vorgesehen, dass die Bremswirkung bzw. Feststellwirkung aufgehoben wird, wenn der Motor eingeschaltet und/oder eine entsprechende Anweisung oder Steuersignal beziehungsweise -befehl an die Feststelleinrichtung gegeben wird. Dadurch kann in einfacher Weise und ohne äußere Eingriffe die Feststelleinrichtung wieder deaktiviert werden. Das Aufsuchen einer Werkstatt, bspw. zum Deaktivieren der Feststelleinrichtung, ist dadurch nicht erforderlich.

Bevorzugt weist das Fahrzeuglenksystem dabei u. a. ein Lenkrad, eine mit diesem verbundene Lenkspindel, welche mit der Lenkkrafthilfe gekoppelt ist, und ein Lenkgestänge auf, durch welches die Räder entsprechend der Lenkbewegungen der Lenkkrafthilfe gelenkt werden.

### Ausführungsbeispiel

Weitere Vorteile und Anwendungsmöglichkeiten der vorliegenden Erfindung ergeben sich aus der nachfolgenden Beschreibung eines Ausführungsbeispieles anhand einer Zeichnung.

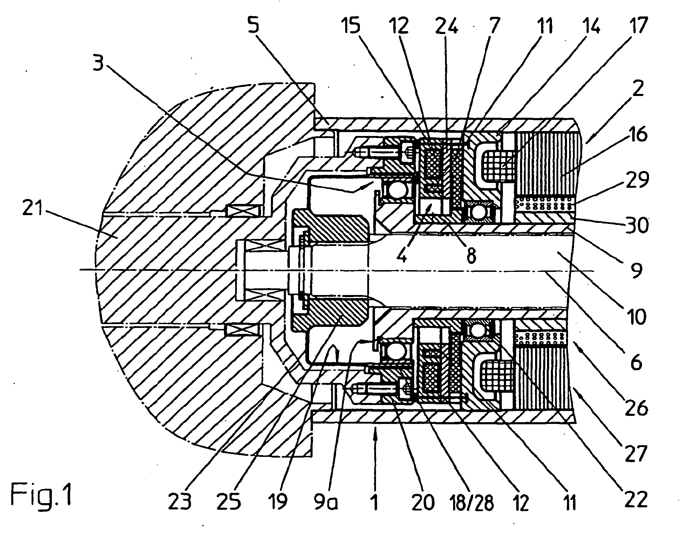

Die einzige Figur zeigt eine mögliche Ausführungsform der erfindungsgemäßen Vorrichtung zum Überlagern von Lenkbewegungen in schematischer Darstellung als Längsschnitt. Die Vorrichtung ist für eine Lenkkrafthilfe vorgesehen, wie sie bspw. bei Kraftfahrzeugen zum Einsatz kommt.

Die Vorrichtung zum Überlagern von Lenkbewegungen, der das Bezugszeichen 1 zugewiesen ist, weist eine Lenkeingangswelle 10 zum Ausführen einer Hauptlenkbewegung auf, welche mittels eines Getriebes 3 mit einer Lenkausgangswelle 21 verbunden ist. Weiterhin ist ein Motor 2 zum Erzeugen einer Hilfslenkbewegung, welcher zum Überlagern der Hilfslenkbewegung mit der Hauptlenkbewegung über seine Abtriebswelle 9 mit dem Getriebe 3 gekoppelt ist.

Die Vorrichtung 1 weist ferner eine zuschaltbare Feststelleinrichtung 4 auf, mittels welcher die Abtriebswelle 9 des Motors 2 drehfest gehalten werden kann. Die Feststelleinrichtung 4 ist als reibschlüssige Bremse ausgebildet, durch welche in deren zugeschaltetem Zustand beim Auftreten von radseitig erzeugten Drehmomenten in der Abtriebswelle 9 über einem vorgegebenen Wert eine Bewegung der Abtriebswelle 9 zugelassen wird.

Bei der als reibschlüssige Bremse ausgebildeten Feststelleinrichtung 4 handelt es sich um eine Scheibenbremse mit einer mit der Abtriebswelle 9 des Motors 2 drehfest verbundenen Bremsscheibe 7 und einem über ein Scheibenelement 24 auf die Bremsscheibe 7 wirkenden, die Bremskraft erzeugenden Teil 11, welches sich an einem Gehäuseteil 14 des Motors 2 mittels wenigstens einer Schraubverbindung abstützt. Die Schraubverbindung kann beispielsweise als über den Umfang des Gehäuseteiles 14 verteilt angeordnete Fixierstifte 15 vorliegen. Das Scheibenelement 24 ist in axialer Richtung beweglich und über die Schraubverbindung, welche die Feststelleinrichtung 4 an dem Gehäuseteil des Motors 2 fixiert, geführt.

Die Bremsscheibe 7 ist zwischen Scheibenelement 24 und dem Gehäuseteil 14 des Motors 2 angeordnet. Die Bremsscheibe 7 ist ferner in axialer Richtung auf einem mit der Abtriebswelle 9 drehfest verbundenen Mitnehmer 8 gegen das Bremskraft erzeugende Teil 11 oder das Gehäuseteil 14 des Motors 2 verschiebbar. Der axiale Schiebesitz der Bremsscheibe 7 auf dem Mitnehmer 8 ist bspw. dadurch erreicht, dass die Bremsscheibe 7 eine Innenverzahnung aufweist, welche mit der Außenverzahnung des Mitnehmers 8 kämmt.

Im zugeschalteten Zustand der Feststelleinrichtung 4 wird das Scheibenelement 24 von dem Bremskraft erzeugenden Teil 11 gegen die Bremsscheibe 7 und diese gegen das Gehäuseteil 14 des Motors 2 gedrückt und dadurch die Abtriebswelle 9 des Motors 2 festgehalten.

Das Bremskraft erzeugende Teil 11 weist vorliegend wenigstens einen Magneten, vorzugsweise einen Permanentmagneten auf. Alternativ oder zusätzlich kann es vorgesehen sein, dass das Bremskraft erzeugende Teil wenigstens ein Federelement aufweist.

Zum Lösen der Bremse 4 ist ein die Bremskraft kompensierendes Teil 12 vorgesehen, welches vorzugsweise elektrisch aktivierbar ist. Durch diese Kombination des als Permanentmagnet ausgebildeten Bremskraft erzeugenden Teiles 11 und des Bremskraft kompensierenden Teiles 12 ist quasi eine permanent erregte Magnetbremse gebildet, welche bei Abschalten der Spannungsversorgung für den Motor 2 und damit Deaktivieren des Bremskraft kompensierenden Teiles 12 die Abtriebswelle 9 im Stillstand hält und ggf. vorher bis auf Stillstand abbremst.

Das Bremskraft kompensierende Teil 12 ist bspw. von wenigstens einer Strom durchflossenen Spule gebildet. Es ist vorzugsweise ringförmig ausgebildet, koaxial zur Abtriebswelle 9 angeordnet und grenzt unmittelbar an das die Bremskraft erzeugende Teil 11 an. Ferner ist das Bremskraft kompensierende Teil 12 von einem metallischen Gehäuseteil 13 der Feststelleinrichtung 4 zur Bildung eines magnetischen Rückschlusses umgeben. Alternativ ist auch ein Gehäuseteil 13 aus anderen Werkstoffen, wie beispielsweise aus Kunststoff, möglich. Durch die Spule 12 wird ein magnetisches Feld erzeugt, dessen Feldlinien entgegengesetzt zu den Feldlinien des als Permanentmagnet ausgebildeten, Bremskraft erzeugenden Teiles 11 ausgerichtet sind. Dadurch wird die resultierende magnetische Kraftwirkung der Felder auf die Bremsscheibe 7 zu Null und die Feststellwirkung der Feststelleinrichtung 4 aufgehoben.

Das Getriebe 3 ist als Spannungswellengetriebe ausgebildet, welches einen mit der Abtriebswelle 9 des Motors 2 drehfest verbundenen Wellengenerator 9a (Wave Generator), einen durch den Wellengenerator 9a bewegbaren, elastisch verformbaren Getriebering 19 (Flexspline) und einen zylindrischen Getriebering 20 (Circular Spline)aufweist, dessen Innenverzahnung 28 mit der Außenverzahnung 18 des Flexsplines 19 kämmt. Der Circular Spline 20 ist dabei mit der Lenkausgangswelle 21 und der Flexspline 19 mit der Lenkeingangswelle 10 drehfest verbunden. Der Flexspline 19 ist damit sowohl durch die Lenkeingangswelle 10, also durch das Lenkrad, als auch über den Wellengenerator 9a durch die Abtriebswelle 9 des Motors 2 der drehbar, so dass auf diese Weise ein Überlagern der Hauptlenkbewegung mit der Hilfslenkbewegung erzeugt werden kann.

Bei dem Ausführungsbeispiel bildet die Abtriebswelle 9 des Motors 2 einen Teil des Wellengenerators 9a. Dabei ist die Abtriebswelle 9 als Hohlwelle ausgebildet, durch welche die Lenkeingangswelle 10 hindurchgreift. Die Abtriebswelle 9 selbst stützt sich über eine Lagerung 22 auf dem Gehäuseteil 14 der Feststelleinrichtung 4 ab. Der Flexspline 19 des Spannungswellengetriebes 3 ist topfförmig ausgebildet und weist eine Bodenfläche 23 auf, welche über eine an der Bodenfläche 23 fixierte Nabe 25 mit der Lenkeingangswelle 10 drehfest verbunden ist. Der Flexspline 19 weist mit seiner Öffnung in Richtung zum Motor 2. Die Nabe 25 ist vorliegend im Wesentlichen innerhalb des topfförmigen Flexsplines 19 angeordnet, wobei sie mit dem Flexspline 19 als ein Bauteil ausgebildet ist. Selbstverständlich ist auch eine Ausbildung in separaten Bauteilen möglich, wobei dann eine kraft- und/oder formschlüssige Verbindung, bspw. durch Verkleben oder Verschweißen, zwischen den einzelnen Bauteilen vorgesehen ist.

Bei dem Motor handelt es sich um einen Elektromotor 2. Er weist einen mit der Abtriebswelle 9 drehfest verbundenen Rotor 26 und einen den Rotor 26 umfangsseitig umgebenden Stator 27 auf. Der Rotor 26 ist durch einen Permanentmagneten 29 gebildet, welcher die Abtriebswelle 9 umgibt und sich mittels eines Metallringes 30 auf der Abtriebswelle 9 abstützt. Der Stator 27 weist mehrere über den Umfang angeordnete Spulen 17 auf, welche jeweils um einen feststehenden Anker 16, einem sogenannten Statorpaket, gewickelt sind.

Die Vorrichtung zum Überlagern von Drehbewegungen ist bei dem hier vorliegenden Ausführungsbeispiel so aufgebaut, dass das Getriebe 3, die Feststelleinrichtung 4 und der Motor 2 hintereinander liegend koaxial bzgl. der Lenkeingangswelle 10 beziehungsweise deren Mittelachse 6 angeordnet sind, wobei alle Bauteile in einem rohrförmigen Gehäuse 5 der Vorrichtung liegen.

Mittels der Vorrichtung zum Überlagern von Drehbewegungen ergibt sich folgende Funktionsweise:

Durch Verdrehen des (nicht dargestellten) Lenkrades wird eine Hauptlenkbewegung erzeugt, welche über die (nicht dargestellte) Lenkspindel und die mit dieser verbundenen Lenkeingangswelle 10 in die Vorrichtung 1 übertragen wird. Von der Lenkeingangswelle 10 wird die Drehbewegung über den Flexspline 19 auf den Circular Spline 20 und von diesem auf die Lenkausgangswelle 21 übertragen. Von dort wird die Drehbewegung ggf. über ein Lenkgetriebe, an die lenkbaren Räder unter Einstellung eines entsprechenden Lenkwinkels weitergeleitet.

Beim Ausführen einer Hauptlenkbewegung über das Lenkrad wird vom Motor 2 eine Hilfslenkbewegung erzeugt, sofern der Motor 2 eingeschaltet ist, das heißt, an diesem eine Spannung anliegt. Die Hilfslenkbewegung wirkt über die Abtriebswelle 9 des Motors 2 und den Wellengenerator 9a des Getriebes 3 auf den Flexspline 19. Da der Wellengenerator 9a aufgrund seiner elliptischen Form bewirkt, dass der Flexspline 19 lediglich an den beiden, die Hauptachse der Ellipse bildenden Enden mit den Circular Spline 20 kämmt, kommt es durch die Drehbewegung des Wellengenerators 9a zu einem Bewegen der Kämmpositionen entlang der Umfangsrichtung. Dadurch wirkt diese Hilfslenkbewegung als Überlagerungsbewegung zur Hauptlenkbewegung auf den Circular Spline 20. Es wirken also zwei sich überlagernde Drehbewegungen auf den Circular Spline 20, welche zum einen durch das Drehen des Flexsplines 19 mittels der Lenkeingangswelle 10 und zum anderen durch das Drehen der Kämmpositionen zwischen dem Flexspline 19 und dem Circular Spline 20 erzeugt werden und die daraus resultierende Drehbewegung der Lenkausgangswelle 21 ergeben. Dadurch ist eine variable, zum Beispiel geschwindigkeitsabhängige, Lenkübersetzung möglich. Es kann beispielsweise bei hohen Geschwindigkeiten des Fahrzeuges der in den Rädern wirksame Lenkeinschlag kleiner gehalten werden, als ihn der Fahrer einstellt, in dem eine zur Hauptlenkbewegung entgegengesetzte Hilfslenkbewegung erzeugt wird. Dadurch ergibt sich eine bessere Spurhaltung des Fahrzeugs bei hohen Geschwindigkeiten und ein sicheres Fahren. Ferner kann bei geringen Geschwindigkeiten des Fahrzeuges durch die Hilfslenkbewegung ein größerer Lenkeinschlag der Räder realisiert werden, als ihn der Fahrer am Lenkrad einstellt, indem eine sich zur Hauptlenkbewegung ergänzende Hilfslenkbewegung erzeugt wird. Dadurch liegt mittels der Hilfslenkbewegung ein kleineres Übersetzungsverhältnis der Lenkeingangswelle 10 und der Drehzahl der Lenkausgangswelle 21 im Vergleich zu einem Lenken ohne Lenkhilfsbewegung vor. Dies ermöglicht ein leichteres Einparken und Durchfahren enger Kurven, da bereits mit einem geringen Verdrehen des Lenkrades ein relativ großer Lenkeinschlag erzeugt wird.

Solange eine Spannungsversorgung an dem Motor 2 und an dem die Bremskraft kompensierenden Teil 12 vorliegt, ist die Feststelleinrichtung 4 nicht zugeschaltet. In diesem Fall erzeugt das die Bremskraft kompensierende Teil 12, welches als Spule ausgebildet ist, ein magnetisches Feld, dessen Feldlinien entgegengesetzt zu den Feldlinien des als Permanentmagneten ausgebildeten, Bremskraft erzeugenden Teiles 11 wirkt, so dass sich die auf das Scheibenelement 24 wirkenden Kräfte aufheben und dadurch das Scheibenelement 24 keine Presskraft gegen die Bremsscheibe ausübt. Die Bremsscheibe 7 dreht dadurch ungebremst mit der Abtriebswelle 9.

Kommt es zu einer Abschaltung der Spannungsversorgung, die bspw. bei einer Störung des Motors 2 oder beim Abstellen des Fahrzeuges vorliegt, ist das Bremskraft kompensierende Teil 12 deaktiviert und das Bremskraft erzeugende Teil 11 bremst die Bremsscheibe 7, indem das Scheibenelement 24 die Bremsscheibe 7 gegen das Gehäuseteil 14 drückt. Sofern die Abtriebswelle 9 vor dem Spannungsausfall in Drehbewegung vorlag, wird diese bis zum Stillstand abgebremst und im Stillstand gehalten.

Liegt im ausgeschalteten Zustand des Motors 2 ein Drehmoment an der Abtriebswelle 9 an, welches durch auf die lenkbaren Räder wirkende Kräfte hervorgerufen wird, und liegt dieses Drehmoment über einem vorgegebenen Wert, dann wirkt die Feststelleinrichtung 4 als Rutschkupplung und lässt ein Zurückdrehen der Abtriebswelle 9 bzw. des Motors 2 zu. Ein derartiges Drehmoment liegt beispielsweise bei einem "Extrembelastungsfall" vor, welcher beim Einstellen bzw. bei der Funktionsprüfung der Lenkung in der Werkstatt entsteht. Dort wirken Kräfte auf die antreibbaren Räder, welche in der Vorrichtung 1 bzw. der Abtriebswelle 9 um bis 30-fach höhere Drehmomente erzeugen, als sie durch den Lenkvorgang des Fahrers hervorgerufen werden. Es kommt dadurch zu einem Durchrutschen der an dem Bremskraft erzeugenden Teil 11 angezogenen Bremsscheibe 7 und somit zu einem Zurückdrehen der Abtriebswelle 9, wodurch sich eine bleibende Verstellung zwischen der Lenkradposition und dem Lenkeinschlag an den Rädern ergibt. Sie kann jedoch problemlos nach der Lenkungsprüfung in der Werkstatt wieder rückgängig gemacht werden. Die Feststelleinrichtung 4 ist also so ausgelegt, dass ein Zurückdrehen der Antriebswelle 9 im Stillstand beziehungsweise bei abgestelltem Fahrzeug zugelassen werden kann. Die Feststelleinrichtung 4 ist ferner so dimensioniert, dass Drehmomente an der Abtriebswelle 9, welche bei zugeschalteter Feststelleinrichtung 4 während der Fahrt des Fahrzeuges auftreten können, nicht zu einem Durchrutschen beziehungsweise Rückdrehen der Abtriebswelle 9 führt, um Gefahrensituationen durch einen falschen Lenkeinschlag an den Rädern zu vermeiden.

Wenn der Motor 2 wieder eingeschaltet bzw. eine entsprechende Anweisung, bspw. mittels einer entsprechenden Steuerung bzw. Regelung, an die Feststelleinrichtung 4 gegeben wird, erfolgt eine Aktivierung des Bremskraft kompensierende Teiles 12, wodurch die Bremswirkung bzw. die Feststellwirkung der Feststelleinrichtung 4 aufgehoben wird. In diesem Fall greift die Lenkhilfe wieder aktiv in die Lenkung des Fahrers ein.

### Bezugszeichenliste

- 1 -: Vorrichtung
- 2 -: Motor
- 3 -: Getriebe
- 4 -: Halteeinrichtung
- 5 -: Gehäuse
- 6 -: Mittelachse
- 7 -: Bremsscheibe
- 8 -: Mitnehmer
- 9 -: Abtriebswelle
- 9a -: Wellengenerator, (Wave Generator)
- 10 -: Lenkeingangswelle
- 11 -: Bremskraft erzeugendes Teil, Dauermagnet
- 12 -: Bremskraft kompensierendes Teil, Spule
- 13 -: Gehäuseteil
- 14 -: Gehäuseteil
- 15 -: Schraubverbindung, Fixierstifte
- 16 -: Anker
- 17 -: Wicklung
- 18 -: Außenverzahnung des Flexsplines
- 19 -: elastisch verformbarer Getriebering (Flexspline)
- 20 -: zylindrischer Getriebering (Circular Spline)
- 21 -: Lenkausgangswelle
- 22 -: Lagerung
- 23 -: Bodenfläche
- 24 -: Scheibenelement
- 25 -: Nabe
- 26 -: Rotor des Motors
- 27 -: Stator des Motors
- 28 -: Innenverzahnung des Circular Splines
- 29 -: Magnet
- 30 -: Metallring

## Patentansprüche

1. Lenksystem mit einer Vorrichtung (1) zum Überlagern von Lenkbewegungen für eine Lenkkrafthilfe bei Kraftfahrzeugen, mit einer Lenkeingangswelle (10) zum Ausführen einer Hauptlenkbewegung, welche mittels eines nichtselbsthemmenden Getriebes (3) mit einer Lenkausgangswelle (21) verbunden ist, einem Motor (2) zum Erzeugen einer Hilfslenkbewegung, welcher zum Überlagern der Hilfslenkbewegung mit der Hauptlenkbewegung über seine Abtriebswelle (9) mit dem Getriebe (3) gekoppelt ist, und mit einer zuschaltbaren Feststelleinrichtung (4), mittels welcher eine Drehbewegung der Abtriebswelle (9) verhinderbar ist, **dadurch gekennzeichnet, dass** die Feststelleinrichtung (4) als Bremse ausgebildet ist, welche im zugeschalteten Zustand der Feststelleinrichtung (4) bei Auftreten eines radseitig erzeugten Drehmomentes in der Abtriebswelle (9) mit einem Wert über einem vorgegebenen Wert zur Vermeidung einer Beschädigung oder Zerstörung der Abtriebswelle (9) und der weiteren im Kraftfluss liegenden Bauteile des Lenksystems eine Bewegung der Abtriebswelle (9) zulässt, wobei der vorgegebene Wert größer als die im Fahrbetrieb des Fahrzeugs bei zugeschalteter Feststelleinrichtung (4) in der Abtriebswelle (9) auftretenden Drehmomente ist.

2. Lenksystem nach Anspruch 1, **dadurch gekennzeichnet, dass** die Feststelleinrichtung (4) eine reibschlüssige Bremse ist.

3. Lenksystem nach einem der vorhergehenden Ansprüche, **dadurch gekennzeichnet, dass** die Feststelleinrichtung (4) eine Scheibenbremse ist mit einer mit der Abtriebswelle (9) des Motors (2) drehfest verbundenen Bremsscheibe (7) und einem Bremskraft erzeugenden Teil (11), welches insbesondere über ein Scheibenelement (24) auf die Bremsscheibe wirkt und sich an einem Gehäuseteil (14) des Motors (2), beispielsweise mittels wenigstens einer Schraubverbindung, abstützt.

4. Lenksystem nach Anspruch 3, **dadurch gekennzeichnet, dass** die Bremsscheibe (7) zwischen dem Bremskraft erzeugenden Teil (11) oder dem Scheibenelement (24) und dem Gehäuseteil (14) des Motors (2) angeordnet ist.

5. Lenksystem nach Anspruch 3 oder 4, **dadurch gekennzeichnet, dass** die Bremsscheibe (7) in axialer Richtung auf einem mit der Abtriebswelle (9) drehfest verbundenen Mitnehmer (8) gegen das Bremskraft erzeugende Teil (11) und/oder gegen das Gehäuseteil (14) des Motors (2) verschiebbar ist.

6. Lenksystem nach Anspruch 5, **dadurch gekennzeichnet, dass** die Bremsscheibe (7) eine Innenverzahnung aufweist, welche mit der Außenverzahnung des Mitnehmers (8) kämmt.

7. Lenksystem nach einem der Ansprüche 3 bis 6, **dadurch gekennzeichnet, dass** im zugeschalteten Zustand der Feststelleinrichtung (4) das Bremskraft erzeugende Teil (11) die Bremsscheibe (7) gegen das Gehäuseteil (14) des Motors (2) drückt.

8. Lenksystem nach einem der Ansprüche 3 bis 6, **dadurch gekennzeichnet, dass** das Bremskraft erzeugende Teil wenigstens einen Magneten, vorzugsweise einen Permanentmagneten (11), oder wenigstens ein Federelement aufweist.

9. Lenksystem nach einem der vorhergehenden Ansprüche, **dadurch gekennzeichnet, dass** zum Lösen der Bremse (4) ein die Bremskraft kompensierendes Teil (12) vorgesehen ist, welches vorzugsweise elektrisch aktivierbar ist.

10. Lenksystem nach Anspruch 9, **dadurch gekennzeichnet, dass** das Bremskraft kompensierende Teil (12) und das Bremskraft erzeugende Teil (11) koaxial zur Abtriebswelle (9) des Motors (2) angeordnet sind.

11. Lenksystem nach Anspruch 9 oder 10, **dadurch gekennzeichnet, dass** das Bremskraft kompensierende Teil (12) und das Bremskraft erzeugende Teil (11) ringförmig ausgebildet sind und unmittelbar aneinandergrenzen.

12. Lenksystem nach einem der Ansprüche 9 bis 11, **dadurch gekennzeichnet, dass** das Bremskraft kompensierende Teil (12) von wenigstens einem Elektromagneten gebildet ist.

13. Lenksystem nach einem der Ansprüche 9 bis 12, **dadurch gekennzeichnet, dass** das Bremskraft kompensierende Teil (12) von einem metallischen Gehäuseteil (13) der Feststelleinrichtung (4) umgeben ist.

14. Lenksystem nach einem der vorhergehenden Ansprüche, **dadurch gekennzeichnet, dass** das Getriebe (3), die Feststelleinrichtung (4) und der Motor (2) hintereinander liegend koaxial bezüglich der Lenkeingangswelle (10) angeordnet sind.

15. Lenksystem nach einem der vorhergehenden Ansprüche, **dadurch gekennzeichnet, dass** das Getriebe ein Spannungswellengetriebe (3) ist, mit einem mit der Abtriebswelle (9) des Motors (2) drehfest verbindbaren Wellengenerator (9a), einem durch den Wellengenerator (9a) bewegbaren elastisch verformbaren Getriebering (19) und einem zylindrischen Getriebering (20), dessen Innenverzahnung (28) mit der Außenverzahnung (18) des elastisch verformbaren Getrieberinges (19) kämmt, wobei der zylindrische Getriebering (20) mit der Lenkausgangswelle (21) und der elastisch verformbare Getriebering (19) mit der Lenkeingangswelle (10) drehfest verbindbar ist.

16. Lenksystem nach Anspruch 15, **dadurch gekennzeichnet, dass** die Abtriebswelle (9) des Motors (2) einen Teil des Wellengenerators (9a) bildet.

17. Lenksystem nach Anspruch 15 oder 16, **dadurch gekennzeichnet, dass** die Abtriebswelle (9) des Motors (2) als Hohlwelle ausgebildet ist, durch welche die Lenkeingangswelle (10) hindurch greift.

18. Lenksystem nach einem der vorhergehenden Ansprüche 13 bis 17, **dadurch gekennzeichnet, dass** eine Lagerung (22) für die Abtriebswelle (9) des Motors (2) vorgesehen ist, welche mit dem Gehäuseteil (13) der Feststelleinrichtung (4) drehfest verbunden ist.

19. Lenksystem nach einem der Ansprüche 15 bis 18, **dadurch gekennzeichnet, dass** der elastisch verformbare Getriebering (19) im Wesentlichen topfförmig ausgebildet ist und mit seiner Öffnung in Richtung zum Motor (2) weist.

20. Lenksystem nach Anspruch 19, **dadurch gekennzeichnet, dass** der topfförmig ausgebildete Getriebering (19) über eine an seiner Bodenfläche (23) angeordneten Nabe (25) mit der Lenkeingangswelle (10) drehfest verbunden ist.

21. Lenksystem nach Anspruch 20, **dadurch gekennzeichnet**, die Nabe (25) im Wesentlichen innerhalb des topfförmig ausgebildeten Getrieberings (19) angeordnet ist.

22. Lenksystem nach einem der vorhergehenden Ansprüche, **dadurch gekennzeichnet, dass** der Motor (2) einen mit der Abtriebswelle (9) drehfest verbundenen Rotor (26) und einen den Rotor (26) umfangsseitig umgebenden Stator (27) aufweist.

23. Verfahren zum Betreiben einer Vorrichtung zum Überlagern von Lenkbewegungen für eine Lenkkrafthilfe, mit einer Lenkeingangswelle (10) zum Ausführen einer Hauptlenkbewegung, welche mittels eines nichtselbsthemmenden Getriebes (3) mit einer Lenkausgangswelle (21) verbunden ist, einem Motor (2) zum Erzeugen einer Hilfslenkbewegung, welcher zum Überlagern der Hilfslenkbewegung mit der Hauptlenkbewegung über seine Abtriebswelle (9) mit dem Getriebe (3) gekoppelt ist, und mit einer zuschaltbaren Feststelleinrichtung (4), mittels welcher eine Drehbewegung der Abtriebswelle (9) verhinderbar ist, insbesondere nach einem der vorhergehenden Ansprüche, bei dem die Drehbewegung der Abtriebswelle (9) im ausgeschalteten Zustand des Motors (2), mittels der Feststelleinrichtung (4) verhindert wird, **dadurch gekennzeichnet, dass** im ausgeschalteten Zustand des Motors (2) ein Zurückdrehen der Abtriebswelle (9) bei Auftreten von radseitig erzeugten Drehmomenten über einem vorgegebenen Wert zur Vermeidung einer Beschädigung oder Zerstörung der Abtriebswelle (9) und der weiteren im Kraftfluss liegenden Bauteile des Lenksystems zugelassen wird, wobei der vorgegebene Wert größer als die im Fahrbetrieb des Fahrzeuges in der Abtriebswelle (9) auftretenden Drehmomente ist.

24. Verfahren nach Anspruch 23, **dadurch gekennzeichnet, dass** im Betrieb des Motors (2) die Feststelleinrichtung (4) bei Bedarf, insbesondere bei einer Fehlfunktion des Motors (2), zugeschaltet wird und die Abtriebswelle (9) bis zu ihrem Stillstand abbremst.

25. Verfahren nach Anspruch 23 oder 24, **dadurch gekennzeichnet, dass** die Bremswirkung beziehungsweise Feststellwirkung aufgehoben wird, wenn der Motor (2) eingeschaltet und/oder eine entsprechende Anweisung oder Steuersignal beziehungsweise -befehl an die Feststelleinrichtung (4) gegeben wird.

26. Fahrzeuglenksystem mit einem Lenkrad, einem mit diesem verbundenen Lenkspindel, einer mit der Lenkspindel gekoppelten Vorrichtung nach einem der Ansprüche 1 bis 22 und einem Lenkgestänge, durch welches die Fahrzeugräder entsprechend der Lenkbewegungen der Lenkkrafthilfe gelenkt werden.

## Claims

1. Steering system device (1) for superimposition of steering movements for steering force assistance in motor vehicles, with a steering input shaft (10) for execution of a main steering movement, which shaft is connected with a steering output shaft (21) by means of a non-irreversible transmission (3), a motor (2) for producing an assisting steering movement, which motor for superimposition of the assisting steering movement with the main steering movement is coupled to the transmission (3) by way of its drive output shaft (9), and with a fixing device (4) which can be switched on and by means of which a rotational movement of the drive output shaft (9) can be prevented, **characterised in that** the fixing device (4) is constructed as a brake which for avoidance of damage to or destruction of the drive output shaft (9) and the further components, which are present in the flow of force, of the steering system allows, in the switched-on state of the fixing device (4), movement of the drive output shaft (9) when a torque produced at the wheel side and with a value above a predetermined value occurs in the drive output shaft (9), wherein the predetermined value is greater than the torque occurring in the drive output shaft (9) in travel operation of the vehicle with the fixing device (4) switched on.

2. Steering system according to claim 1, **characterised in that** the fixing device (4) is a friction-coupling brake.

3. Steering system according to one of the preceding claims, **characterised in that** the fixing device (4) is a disc brake with a brake disc (7), which is connected with the drive output shaft (9) of the motor (2) to be secure against rotation relative thereto, and a part (11), which produces braking force and which acts on the brake disc particularly by way of a disc element (24) and is supported at a housing part (14) of the motor (2), for example by means of at least one screw connection.

4. Steering system according to claim 3, **characterised in that** the brake disc (7) is arranged between the part (11) or the disc element (24), which part produces braking force, and the housing part (14) of the motor (2).

5. Steering system according to claim 3 or 4, **characterised in that** the brake disc (7) is displaceable, against the part (11) which produces braking force and/or against the housing part (14) of the motor (2), in axial direction on an entrainer (8) connected with the drive output shaft (9) to be secure against rotation relative thereto.

6. Steering system according to claim 5, **characterised in that** the brake disc (7) has an internal toothing meshing with the external toothing of the entrainer (8).

7. Steering system according to one of claims 3 to 6, **characterised in that** the part (11) producing braking force presses the brake disc (7) against the housing part (14) of the motor (2) in the switched-on state of the fixing device (4).

8. Steering system according to one of claims 3 to 6, **characterised in that** the part producing braking force comprises at least one magnet, preferably a permanent magnet (11), or at least one spring element.

9. Steering system according to one of the preceding claims, **characterised in that** a part (12) which compensates for the braking force and which preferably is electrically activatable is provided for releasing the brake (4).

10. Steering system according to claim 9, **characterised in that** the part (12) compensating for braking force and the part (11) producing braking force are arranged coaxially with the drive output shaft (9) of the motor (2).

11. Steering system according to claim 9 or 10, **characterised in that** the part (12) compensating for braking force and the part (11) producing braking force are of annular construction and directly adjoin one another.

12. Steering system according to one of claims 9 to 11, **characterised in that** the part (12) compensating for braking force is formed by at least one electromagnet.

13. Steering system according to one of claims 9 to 12, **characterised in that** the part (12) compensating for braking force is surrounded by a metallic housing part (13) of the fixing device (4).

14. Steering system according to one of the preceding claims, **characterised in that** the transmission (3), the fixing device (4) and the motor (2) are arranged to lie coaxially one after the other with respect to the steering input shaft (10).

15. Steering system according to one of the preceding claims, **characterised in that** the transmission is a voltage wave transmission (3), with a wave generator (9a) connectible with the drive output shaft (9) of the motor (2) to be secure against rotation relative thereto, a resiliently deformable transmission ring (19), which is movable by the wave generator (9a), and a cylindrical transmission ring (20), the internal toothing (28) of which meshes with the external toothing (18) of the resiliently deformable transmission ring (19), wherein the cylindrical transmission ring (20) is connectible with the steering output shaft (21) to be secure against rotation relative thereto and the resiliently deformable transmission ring (19) is connectible with the steering input shaft (10) to be secure against rotation relative thereto.

16. Steering system according to claim 15, **characterised in that** the drive output shaft (9) of the motor (2) forms a part of the wave generator (9a).

17. Steering system according to claim 15 or 16, **characterised in that** the drive output shaft (9) of the motor (2) is constructed as a hollow shaft through which the steering input shaft (10) passes.

18. Steering system according to one of the preceding claims 13 to 17, **characterised in that** a bearing (22) is provided for the drive output shaft (9) of the motor (2), which is connected with the housing part (13) of the fixing device (4) to be secure against rotation relative thereto.

19. Steering system according to one of claims 15 to 18, **characterised in that** the resiliently deformable transmission ring (19) is of substantially pot-shaped construction and faces by its opening in direction towards the motor (2).

20. Steering system according to claim 19, **characterised in that** the transmission ring (19) of pot-shaped construction is connected by way of a hub (25), which is arranged at its base surface (23), with the steering input shaft (10) to be secure against rotation relative thereto.

21. Steering system according to claim 20, **characterised in that** the hub (25) is arranged substantially within the transmission ring (19) of pot-shaped construction.

22. Steering system according to one of the preceding claims, **characterised in that** the motor (2) comprises a rotor (26) connected with the drive output shaft (9) to be secure against rotation relative thereto and a stator (27) surrounding the rotor (26) at the circumference.

23. Method for operating a device (1) for superimposition of steering movements for steering force assistance, with a steering input shaft (10) for execution of a main steering movement, which shaft is connected with a steering output shaft (21) by means of a non-irreversible transmission (3), a motor (2) for producing an assisting steering movement, which motor for superimposition of the assisting steering movement with the main steering movement is coupled to the transmission (3) by way of its drive output shaft (9), and with a fixing device (4) which can be switched on and by means of which a rotational movement of the drive output shaft (9) can be prevented, in particular according to one of the preceding claims, in which the rotational movement of the drive output shaft (9) in the switched-off state of the motor (2) is prevented by means of the fixing device (4), **characterised in that**, for avoidance of damage to or destruction of the drive output shaft (9) and the further components, which are present in the flow of force, of the steering system, in the switched-off state of the motor (2) a return rotation of the drive output shaft (9) is permitted when torques, which are generated at the wheel side, above a predetermined value occur, wherein the predetermined value is greater than the torque occurring in the drive output shaft (9) in travel operation of the vehicle.

24. Method according to claim 23, **characterised in that** in operation of the motor (2) the fixing device (4) is switched on when required, particularly in the case of faulty functioning of the motor (2), and the drive output shaft (9) is braked to a standstill thereof.

25. Method according to claim 23 or 24, **characterised in that** the braking action or fixing action is cancelled when the motor (2) is switched on and/or a corresponding instruction or control signal or control command is given to the fixing device (4).

26. Vehicle steering system, with a steering wheel, a steering spindle connected therewith, a device according to one of claims 1 to 22 coupled with the steering spindle and a steering linkage, by which the vehicle wheels are steered in correspondence with the steering movements of the power steering system.

## Revendications

1. Système de direction avec un dispositif (1) permettant de superposer des mouvements de direction, destiné à une assistance de force de direction dans des véhicules automobiles, avec un arbre d'entrée de direction (10) destiné à effectuer un mouvement de direction principal, lequel est relié à un arbre de sortie de direction (21) au moyen d'un engrenage (3) non autobloquant, un moteur (2) destiné à produire un mouvement de direction auxiliaire, lequel est couplé à l'engrenage (3) via son arbre mené (9) afin de superposer le mouvement de direction auxiliaire au mouvement de direction principal, et avec un dispositif d'immobilisation (4) activable qui permet d'empêcher un mouvement de rotation de l'arbre mené (9), **caractérisé en ce que** le dispositif d'immobilisation (4) est réalisé sous la forme d'un frein qui, à l'état activé du dispositif d'immobilisation (4), autorise un mouvement de l'arbre mené (9) lorsqu'un couple de rotation, généré du côté des roues, survient dans l'arbre mené (9) avec une valeur supérieure à une valeur prédéfinie, afin d'éviter un endommagement ou une détérioration de l'arbre mené (9) et des autres composants situés dans le flux de force du système de direction, dans lequel la valeur prédéfinie est supérieure aux couples de rotation survenant dans l'arbre mené (9) en cours de déplacement du véhicule lorsque le dispositif d'immobilisation (4) est activé.

2. Système de direction selon la revendication 1, **caractérisé en ce que** le dispositif d'immobilisation (4) est un frein à friction.

3. Système de direction selon l'une quelconque des revendications précédentes, **caractérisé en ce que** le dispositif d'immobilisation (4) est un frein à disque, avec un disque de frein (7) relié sans pouvoir tourner à l'arbre mené (9) du moteur (2), et une pièce (11) générant une force de freinage, lequel système agit sur le disque de frein en particulier via un élément de disque (24) et prend appui sur une partie (14) du carter du moteur (2), par exemple via au moins un assemblage de vis.

4. Système de direction selon la revendication 3, **caractérisé en ce que** le disque de frein (7) est agencé entre la pièce (11) générant la force de freinage ou l'élément de disque (24) et la partie (14) du carter du moteur (2).

5. Système de direction selon la revendication 3 ou 4, **caractérisé en ce que** le disque de frein (7) peut être déplacé dans le sens axial sur un entraîneur (8), relié sans pouvoir tourner à l'arbre mené (9), vers la pièce (11) générant la force de freinage et/ou vers la partie (14) du carter du moteur (2).

6. Système de direction selon la revendication 5, **caractérisé en ce que** le disque de frein (7) présente une denture intérieure qui s'engrène avec la denture extérieure de l'entraîneur (8).

7. Système de direction selon l'une quelconque des revendications 3 à 6, **caractérisé en ce que**, à l'état activé du dispositif d'immobilisation (4), la pièce (11) générant la force de freinage pousse le disque de frein (7) contre la partie (14) du carter du moteur (2).

8. Système de direction selon l'une quelconque des revendications 3 à 6, **caractérisé en ce que** la pièce générant la force de freinage présente au moins un aimant, de préférence un aimant permanent (11), ou au moins un élément de ressort.

9. Système de direction selon l'une quelconque des revendications précédentes, **caractérisé en ce que** pour le desserrage du frein (4), il est prévu une pièce (12) compensant la force de freinage, lequel système peut être actionné de préférence électriquement.

10. Système de direction selon la revendication 9, **caractérisé en ce que** la pièce (12) compensant la force de freinage et la pièce (11) générant la force de freinage sont agencées coaxialement à l'arbre mené (9) du moteur (2).

11. Système de direction selon la revendication 9 ou 10, **caractérisé en ce que** la pièce (12) compensant la force de freinage et la pièce (11) générant la force de freinage sont réalisées en forme de bagues et sont directement limitrophes l'une à l'autre.

12. Système de direction selon l'une quelconque des revendications 9 à 11, **caractérisé en ce que** la pièce (12) compensant la force de freinage est formée par au moins un électroaimant.

13. Système de direction selon l'une quelconque des revendications 9 à 12, **caractérisé en ce que** la pièce (12) compensant la force de freinage est entourée par une partie métallique (13) du carter du dispositif d'immobilisation (4).

14. Système de direction selon l'une quelconque des revendications précédentes, **caractérisé en ce que** l'engrenage (3), le dispositif d'immobilisation (4) et le moteur (2) sont agencés horizontalement les uns derrière les autres et coaxialement à l'arbre d'entrée de direction (10).

15. Système de direction selon l'une quelconque des revendications précédentes, **caractérisé en ce que** l'engrenage est un engrenage d'arbre de tension (3), avec un alternateur d'arbre (9a) reliable sans pouvoir tourner à l'arbre mené (9) du moteur (2), une bague d'engrenage (19) élastiquement déformable et pouvant être déplacée par l'alternateur d'arbre (9a), et une bague d'engrenage (20) cylindrique dont la denture intérieure (28) s'engrène avec la denture extérieure (18) de la bague d'engrenage (19) élastiquement déformable, dans lequel la bague d'engrenage (20) cylindrique peut être reliée sans pouvoir tourner à l'arbre de sortie de direction (21), et la bague d'engrenage (19) élastiquement déformable peut être reliée sans pouvoir tourner à l'arbre d'entrée de direction (10) du système de direction.

16. Système de direction selon la revendication 15, **caractérisé en ce que** l'arbre mené (9) du moteur (2) forme une partie de l'alternateur d'arbre (9a).

17. Système de direction selon la revendication 15 ou 16, **caractérisé en ce que** l'arbre mené (9) du moteur (2) est réalisé sous la forme d'un arbre creux, à travers lequel passe l'arbre d'entrée de direction (10).

18. Système de direction selon l'une quelconque des revendications 13 à 17, **caractérisé en ce que**, pour l'arbre mené (9) du moteur (2), il est prévu un palier (22) relié sans pouvoir tourner à la partie (13) du carter du dispositif d'immobilisation (4).

19. Système de direction selon l'une quelconque des revendications 15 à 18, **caractérisé en ce que** la bague d'engrenage (19) élastiquement déformable est réalisée sensiblement en forme de pot avec son ouverture orientée vers le moteur (2).

20. Système de direction selon la revendication 19, **caractérisé en ce que** la bague d'engrenage (19) réalisée en forme de pot est reliée sans pouvoir tourner à l'arbre d'entrée de direction (10) via un moyeu (25) agencé dans son fond (23).

21. Système de direction selon la revendication 20, **caractérisé en ce que** le moyeu (25) est agencé sensiblement à l'intérieur de la bague d'engrenage (19) réalisée en forme de pot.

22. Système de direction selon l'une quelconque des revendications précédentes, **caractérisé en ce que** le moteur (2) présente un rotor (26) relié sans pouvoir tourner à l'arbre mené (9), et un stator (27) entourant le pourtour du rotor (26).

23. Procédé de fonctionnement d'un dispositif (1) permettant de superposer des mouvements de direction, destiné à une assistance de force de direction, avec un arbre d'entrée de direction (10) destiné à effectuer un mouvement de direction principal, lequel est relié à un arbre de sortie de direction (21) au moyen d'un engrenage (3) non autobloquant, un moteur (2) destiné à produire un mouvement de direction auxiliaire, lequel est couplé à l'engrenage (3) via son arbre mené (9) afin de superposer le mouvement de direction auxiliaire au mouvement de direction principal, et avec un dispositif d'immobilisation (4) activable qui permet d'empêcher un mouvement de rotation de l'arbre mené (9), en particulier selon l'une quelconque des revendications précédentes, dans lequel le mouvement de rotation de l'arbre mené (9) est empêché par le dispositif d'immobilisation (4) lorsque le moteur (2) est à l'état désactivé, **caractérisé en ce qu'**à l'état désactivé du moteur (2), une rotation dans le sens retour de l'arbre mené (9) est autorisée lorsque surviennent des couples de rotation générés du côté des roues et dépassant une valeur prédéfinie, afin d'éviter un endommagement ou une détérioration de l'arbre mené (9) et des autres composants situés dans le flux de force du système de direction, dans lequel la valeur prédéfinie est supérieure aux couples de rotation survenant dans l'arbre mené (9) en cours de déplacement du véhicule.

24. Procédé selon la revendication 23, **caractérisé en ce que**, pendant le fonctionnement du moteur (2), le dispositif d'immobilisation (4) est activé en cas de besoin, en particulier dans le cas d'un dysfonctionnement du moteur (2), et l'arbre mené (9) est freiné jusqu'à son immobilisation.

25. Procédé selon la revendication 23 ou 24, **caractérisé en ce que** l'effet de freinage, plus précisément l'effet d'immobilisation (4), est levé lorsque le moteur (2) est activé et/ou lorsqu'une instruction correspondante ou un signal de commande ou une instruction de commande sont transmis au dispositif d'immobilisation (4).

26. Système de direction pour véhicule automobile, avec un volant, une colonne de direction reliée à ce dernier, un dispositif selon l'une quelconque des revendications 1 à 22 couplé à la colonne de direction, et une tringlerie de direction, via laquelle les roues du véhicule sont dirigées conformément aux mouvements de direction de l'assistance de direction.
